# EUROPEAN PATENT SPECIFICATION

(11) **EP 3 650 340 B1**
(45) Date of publication and mention of the grant of the patent: **20.10.2021**
(21) Application number: 18306482.3
(22) Date of filing: 12.11.2018
(51) Int. Cl.: B64C 27/12, F16D 9/02, F16D 65/78, F16D 55/22, F16D 65/847

(54) **ROTOR BRAKE OVERHEAT MANAGEMENT DEVICE**
ROTORBREMSÜBERHITZUNGSVERWALTUNGSVORRICHTUNG
DISPOSITIF DE GESTION DE SURCHAUFFE DE FREIN DE ROTOR

(43) Date of publication of application: 13.05.2020
(73) Proprietor: Ratier-Figeac SAS, 46101 Figeac Cedex (FR)
(72) Inventor: PROUZET, Bertrand, 46100 FIGEAC (FR)
(74) Representative: Dehns

(56) References cited:
- EP-A1- 2 865 595
- CN-A- 104 684 357
- GB-A- 2 088 503
- US-A- 3 188 961
- US-A- 5 139 118
- US-A1- 2010 101 899
- US-A1- 2015 275 993

## Description

### TECHNICAL FIELD

The examples described herein relate to devices and methods for managing overheating of a rotor brake. In particular, these devices and methods may be used in a rotor brake of a helicopter.

### BACKGROUND

Typically, when a helicopter engine is switched off, the rotor of the helicopter quickly decelerates to half of the nominal speed for flight due to the torque generated by rotor blade drag. After this, the drag torque on the rotor blades is much lower and several minutes are needed to fully stop the rotor. In normal use, a helicopter rotor brake is used to reduce the time needed to fully stop the rotor. This is typically known as 'nominal braking'. In an emergency situation, the helicopter rotor brake may be activated when the helicopter engines are switched off and the rotor is still at nominal speed. This is typically known as 'emergency braking'. During emergency braking, the energy absorbed by the brakes is approximately four times the energy absorbed during nominal braking.

Helicopter rotor brakes are normally located on a helicopter upper deck close to the engines and other hydraulic circuits. If a leakage occurs from one of these circuits, hydraulic fluid may be sprayed on to the brake. This is hazardous in that the fluid may ignite if in contact with hot parts of the brake during braking. In order to avoid ignition of fluid, the external surface of the brake should not exceed the ignition temperature of the fluid during nominal or emergency braking. If the brake does exceed the ignition temperature of the fluid, a fire on the helicopter may occur.

One way to avoid fluid ignition is to isolate the brake inside a protective box made of refractory materials. However, in these systems the internal parts of the brake may reach higher temperatures and this reduces performance and reliability of the internal parts. Further, isolating the brake means that the brake takes longer to cool down and therefore it is necessary to wait before the engine of the helicopter can be restarted.

Another way to avoid fluid ignition is to install a heatsink in the brake calliper. The heatsink is typically sized to dissipate the heat from the brake such that the external surface of the brake does not reach temperatures that cause the fluid to ignite even for emergency braking. The heatsink is therefore sized in order to be able to dissipate four times the nominal braking energy. Cooling fins used in such heatsinks require a lot of volume to dissipate the heat making the installation of the heatsink and the brake calliper more difficult. Due to the large size of the heatsink, there is a significantly greater overall weight of the braking system. GB2088503A relates to hydraulically controlled brakes for protecting against overheating of the hydraulic fluid. The brakes comprise friction elements adapted to be clamped against a track on a rotatable element by the thrust of a piston member mounted to slide in a cylinder member. In a cavity of the piston member mass of material preferably passes from a solid phase to a liquid phase during its change of physical state at predetermined temperatures to absorbe heat. CN104684357A relates to a radiator, US 2015/275993 A1 relates to phase change materials for temperature management in brakes, US5139118A relates to a phase change disc brake, US3188961A relates to means for cooling structures, US 2010/101899 A1 relates to a brake calliper including heat pipes and EP2865595A1 relates to a rotor brake control system.

### SUMMARY OF THE INVENTION

A heatsink for a brake calliper according to claim 1 is provided.

The heatsink may further include a plurality of cooling fins located adjacent the hollow base.

Further, the intermediate material is configured to melt so as to absorb thermal energy from the brake calliper. The melting temperature of the intermediate material may be preferably above 520 Kelvin and below 575 Kelvin.

Preferably, the intermediate material may consist of at least one of a metallic alloy, polymer and/or chemical salt.

The hollow base may preferably be surrounded by a refractory housing.

The heatsink also includes internal fins that extend into the intermediate material.

In another example, there is provided a brake calliper. The brake calliper includes a rotor blade, a shaft connected to the rotor blade, a rotor brake connected to the shaft and a heatsink as described above connected to the rotor brake

Preferably, the brake calliper may further include a plurality of discs adjacent a first side of the hollow base, a plurality of cooling fins adjacent a second side of the hollow base, a first plurality of internal fins extending into the intermediate material from the first side of the hollow base and a second plurality of internal fins extending into the intermediate material from the second side of the hollow base. There is also provided a method of transferring thermal energy from a brake calliper during an emergency brake operation according to claim 9. The method includes providing a heatsink, wherein the heatsink includes a hollow base. The method further includes providing an intermediate material in the hollow base, wherein, during an emergency brake operation, the intermediate material melts to absorb thermal energy from the brake calliper.

### BRIEF DESCRIPTION OF THE DRAWINGS

Figure 1 shows the basic features of a standard helicopter with a braking system.
Figure 2 shows a known braking calliper with a heat sink.
Figure 3A shows an example of a braking calliper with a new heat sink as described herein.
Figure 3B shows the heatsink assembly of the braking calliper shown in Figure 3A.
Figure 4 depicts a graph of a latent fusion heat effect.

### DETAILED DESCRIPTION

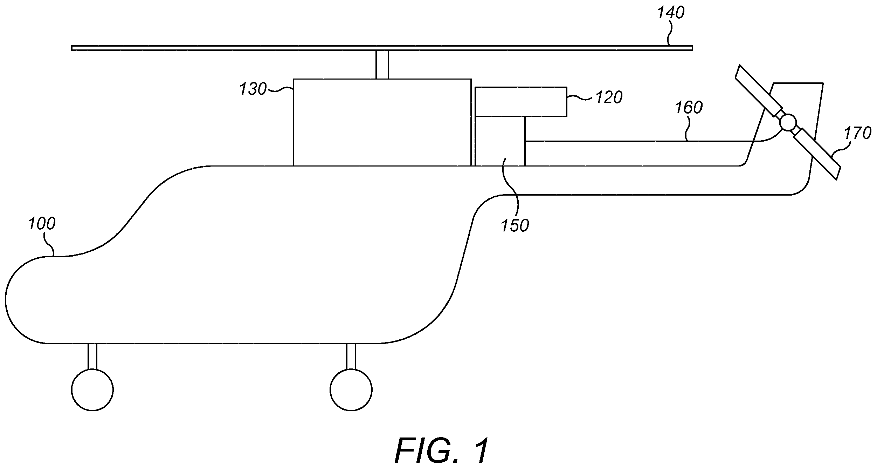

An overview of a helicopter 100 is shown in Figure 1, which depicts the basics of the braking features. The helicopter 100 comprises a motor 120, a main gear box 130, a rotor blade 140, a rotor brake 150, a tail rotor shaft 160, and a tail rotor 170. The rotor brake 150 may apply nominal braking or emergency braking to decrease the speed of the rotor blade 140.

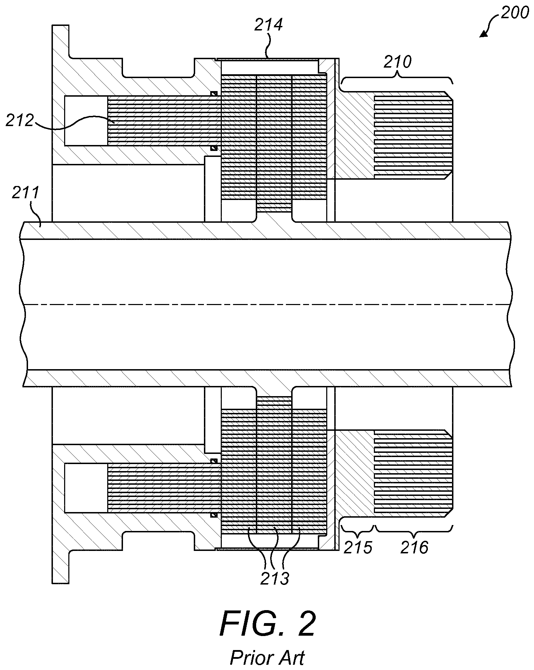

Figure 2 shows a known brake calliper 200 with a heatsink 210 installed. As shown in Figure 2, the brake calliper 200 includes a shaft 211 connected to a rotor (for example, the rotor blades 140 of Figure 1), pistons 212 to apply a braking force to discs 213 so as to cause braking of the rotor (for example, the rotor blades 140 of Figure 1). A housing 214 is provided to surround the pistons 212 and discs 213. The heatsink 210 includes a base 215 and fins 216. The heatsink 210 allows for thermal energy to dissipate through the base 215 and fins 216 during emergency braking of the helicopter. However, as emergency situations are very rare, it is typical that the helicopter only experiences nominal braking in daily use. Nominal braking uses roughly a quarter of the energy of emergency braking and, therefore, the heatsink 210 of the brake calliper 200 is oversized for everyday use.

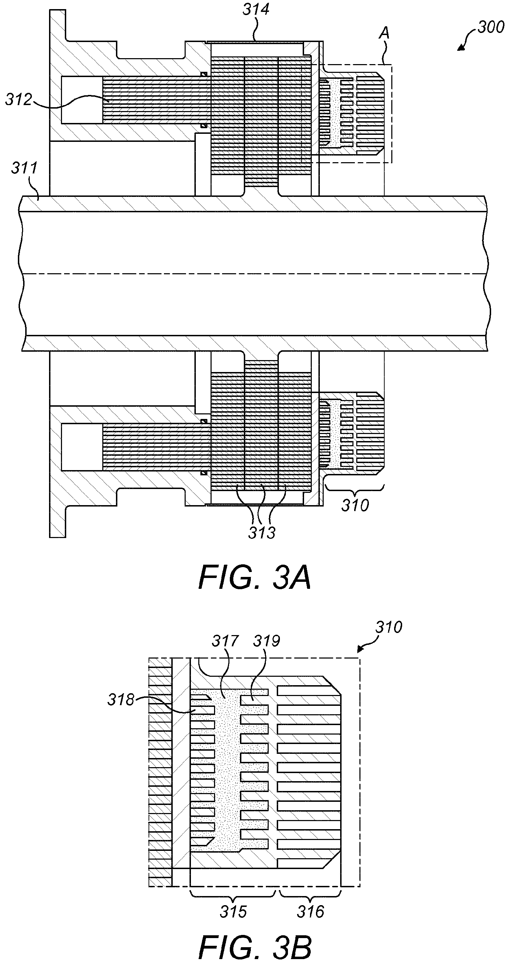

Figure 3A shows an example of a new brake calliper 300. As shown in Figure 3A, the brake calliper 300 includes a shaft 311 connected to a rotor (for example, the rotor blades 140 of Figure 1), pistons 312 to apply a braking force to discs 313 so as to cause braking of the rotor (for example, the rotor blades 140 of Figure 1). A refractory housing 314 is provided to surround the pistons 312 and discs 313. Heatsink 310 is shown in Figure 3A and a portion A is depicted in Figure 3B.

Figure 3B shows an example of a new heatsink 310 that can be installed in a braking system 300 (shown in Figure 3A). The heatsink 310 includes a hollow base 315 and may include cooling fins 316 that are external to the base 315. An intermediate material 317 may be provided within the hollow base 315. The base 315 includes internal fins 318 and 319 which extend into the intermediate material 317.

The intermediate material 317 may be specifically chosen such that the intermediate material 317 has a melting temperature that is below the temperature required to ignite fluid, but above the temperature of the environment surrounding the heatsink 310 during normal operation. As an example, the melting temperature of the intermediate material 317 is above 520 Kelvin and below 575 Kelvin. The intermediate material 317 may consist of metallic alloy, for example Tin and antimony of tin having a melting point between 520 Kelvin to 573 Kelvin pending to tin percentage from 8% to 12 %, polymer, for example Nylon 6-6 having a melting point of 537 Kelvin, or chemical salt.

As the intermediate material 317 has a melting temperature that is above the temperature of the environment of the heatsink 310 during normal operation, when normal (nominal) braking is applied, the intermediate material 317 remains solid and heat (i.e., thermal energy) is transferred through the intermediate material 317 to the cooling fins 316 where the thermal energy is dissipated.

The intermediate material 317 also may have a melting temperature that is below the temperature that ignites hydraulic fluid. Therefore, when the temperature of the brake rises above the normal operational temperature, for example during emergency braking, the intermediate material 317 begins to melt. As mentioned above, during emergency braking, the amount of energy that needs to be dissipated is approximately four times greater than the energy to be dissipated during normal braking (and normal operation). During the melting of the intermediate material 317, and due to latent heat fusion, the intermediate material 317 absorbs the thermal energy. Therefore, the temperature does not increase any further while the intermediate material 317 is still melting and the fluid never reaches a temperature at which it ignites. In addition, the cooling fins 316 may also dissipate thermal energy transferred from the intermediate material 317 during the melting process.

The hollow base 315 may also include a first plurality of internal fins 318 and a second plurality of internal fins 319 that extend radially inward, for example, from the hollow base 315 and into the intermediate material 317. In order to ensure efficient heat dissipation, the heat generated by the discs 313 during braking should be transmitted to the base 315 as soon as possible. The higher the thermal gradient between the base 315 and the brake environment, the more efficient the cooling fins 316 will be. The refractory housing 314 avoids heat transfer out of the system. Therefore, braking energy is mainly transmitted to the base 315.

Further, the first and second plurality of internal fins 318 and 319 improve heat transfer. The first plurality of internal fins 318 extend from a first side of the base 315 closest to the discs 313, in use. The first plurality of internal fins 318 improve heat transfer from discs 313 to the intermediate material 317. The first plurality of internal fins 318 allow the intermediate material 317 to increase in temperature as homogeneously as possible. The second plurality of internal fins 319 extend from the base 315 into the intermediate material 317 on a second side of the base 315 closest to the cooling fins 316. The second plurality of internal fins 319 improve heat transfer from the intermediate material 317 to the cooling fins 316.

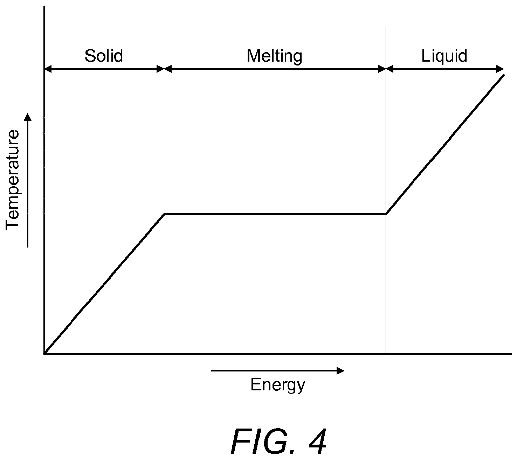

Figure 4 shows an example graph of latent heat fusion of the intermediate material 317. As can be seen in this graph, as temperature rises in the 'solid' phase, the amount of energy absorbed increases. During the 'melting' phase, the amount of energy absorbed increases over time but there is no temperature rise. Therefore, in this example, the intermediate material 317 allows the temperature to remain the same during the 'melting' phase so that, provided the intermediate material 317 does not completely melt, any fluid is not ignited during emergency braking. Further, as significant energy is absorbed through the intermediate material 317, the cooling fins 316 may be significantly reduced in size and the heatsink 310 is less bulky than those used in known systems - for example, as shown in Figure 2.

The heatsink 310 shown in Figure 3 may also be used as a replaceable component and can be installed as a replacement to a heatsink 210 shown in Figure 2. The heatsink 310, for example, could be used in the brake calliper 200 of Figure 2.

Although this disclosure has been described in terms of preferred examples, it should be understood that these examples are illustrative only and that the claims are not limited to those examples. Those skilled in the art will be able to make modifications and alternatives in view of the disclosure which are contemplated as falling within the scope of the appended claims.

## Claims

1. A heatsink (310) for a brake calliper, said heatsink (310) comprising;
a hollow base (315);
an intermediate material (317) provided in the hollow base (315); wherein, in use during an emergency brake operation, the intermediate material (317) is configured to melt and absorb thermal energy from the brake calliper (300); **characterised in that** the heatsink further comprises internal fins (318, 319) extending into the intermediate material (317).

2. The heatsink of claim 1, further comprising a plurality of cooling fins (316) located adjacent the hollow base (315).

3. The heatsink of claims 1 or 2, wherein, in use, the intermediate material (317) is configured to melt above a temperature of the environment during normal braking operation and below a temperature of the environment during emergency braking operation so as to absorb thermal energy.

4. The heatsink of claim 3, wherein the melting temperature of the intermediate material (317) is above 520 Kelvin and below 575 Kelvin.

5. The heatsink of any preceding claim, wherein the intermediate material (317) is at least one of a metallic alloy, polymer and/or chemical salt.

6. The heatsink of any preceding claim, wherein the hollow base (315) is surrounded by a refractory housing (314).

7. A brake calliper (300), said brake calliper comprising;
a rotor blade (140);
a shaft connected to the rotor blade (311);
a rotor brake (150) connected to the shaft;
a heatsink (310) as claimed in any of claims 1-6 connected to the rotor brake (150).

8. The brake calliper of claim 7, the brake calliper further comprising:
a plurality of discs (313) adjacent a first side of the hollow base (315);
a plurality of cooling fins (316) adjacent a second side of the hollow base (315);
a first plurality of internal fins (318) extending into the intermediate material from the first side of the hollow base (315); and
a second plurality of internal fins (319) extending into the intermediate material from the second side of the hollow base (315).

9. A method of transferring thermal energy from a brake calliper (300) during an emergency brake operation, the method comprising:
providing a heatsink (310), said heatsink (310) comprising a hollow base (315);
providing an intermediate material (317) in the hollow base (315), wherein, during an emergency brake operation, the intermediate material (317) melts to absorb thermal energy from the brake calliper (300); **characterised in that** the heatsink further comprises internal fins (318, 319) extending into the intermediate material (317).

10. The method of claim 9, wherein the intermediate material (317) melts above a temperature of the environment during normal braking operation and below a temperature of the environment during emergency braking operation to absorb thermal energy.

11. The method of claim 10, wherein the melting temperature of the intermediate material (317) is above 520 Kelvin and below 575 Kelvin.

12. The method of any of claims 9-10, wherein the intermediate material (317) is at least one of a metallic alloy, polymer and/or chemical salt.

13. The method of any of claims 9-11, wherein the hollow base (315) is surrounded by a refractory housing (314).

## Patentansprüche

1. Wärmeableitblech (310) für einen Bremssattel, wobei das Wärmeableitblech (310) Folgendes umfasst:
eine hohle Basis (315);
ein Zwischenmaterial (317), welches in der hohlen Basis (315) bereitgestellt ist; wobei das Zwischenmaterial (317) in Verwendung während eines Notbremsbetriebs dazu konfiguriert ist, zu schmelzen und thermische Energie von dem Bremssattel (300) zu absorbieren; **dadurch gekennzeichnet, dass** der Wärmeableitblech ferner innere Rippen (318, 319) umfasst, welche sich in das Zwischenmaterial (317) erstrecken.

2. Wärmeableitblech nach Anspruch 1, ferner umfassend eine Vielzahl von Kühlrippen (316), welche sich benachbart zu der hohlen Basis (315) erstrecken.

3. Wärmeableitblech nach Anspruch 1 oder 2, wobei das Zwischenmaterial (317) in Verwendung dazu konfiguriert ist, während eines normalen Bremsbetriebs oberhalb einer Umgebungstemperatur und während eines Notbremsbetriebs unterhalb einer Umgebungstemperatur zu schmelzen, um thermische Energie zu absorbieren.

4. Wärmeableitblech nach Anspruch 3, wobei die Schmelztemperatur des Zwischenmaterials (317) über 520 Kelvin und unter 575 Kelvin beträgt.

5. Wärmeableitblech nach einem der vorstehenden Ansprüche, wobei das Zwischenmaterial (317) mindestens eines von einer metallischen Legierung, einem Polymer und/oder einem chemischen Salz ist.

6. Wärmeableitblech nach einem der vorstehenden Ansprüche, wobei die hohle Basis (315) durch ein feuerfestes Gehäuse (314) umgeben ist.

7. Bremssattel (300), wobei der Bremssattel Folgendes umfasst:
eine Rotorlaufschaufel (140);
eine Welle, welche mit der Rotorlaufschaufel (311) verbunden ist;
eine Rotorbremse (150), welche mit der Welle verbunden ist;
eine Wärmeableitblech (310) nach einem der Ansprüche 1-6, welches mit der Rotorbremse (150) verbunden ist.

8. Bremssattel nach Anspruch 7, wobei der Bremssattel ferner Folgendes umfasst:
eine Vielzahl von Scheiben (313) benachbart zu einer ersten Seite der hohlen Basis (315);
eine Vielzahl von Kühlrippen (316) benachbart zu einer zweiten Seite der hohlen Basis (315);
eine erste Vielzahl von inneren Rippen (318), welche sich von der ersten Seite der hohlen Basis (315) in das Zwischenmaterial erstrecken; und
eine zweite Vielzahl von inneren Rippen (319), welche sich von der zweiten Seite der hohlen Basis (315) in das Zwischenmaterial erstrecken.

9. Verfahren zum Übertragen von thermischer Energie für einen Bremssattel (300) während eines Notbremsbetriebs, wobei das Verfahren Folgendes umfasst:
Bereitstellen eines Wärmeableitblechs (310), wobei das Wärmeableitblech (310) eine hohle Basis (315) umfasst;
Bereitstellen eines Zwischenmaterials (317) in der hohlen Basis (315), wobei das Zwischenmaterial (317) während eines Notbremsbetriebs schmilzt, um thermische Energie von dem Bremssattel (300) zu absorbieren; **dadurch gekennzeichnet, dass** das Wärmeableitblech ferner innere Rippen (318, 319) umfasst, welche sich in das Zwischenmaterial (317) erstrecken.

10. Verfahren nach Anspruch 9, wobei das Zwischenmaterial (317) während eines normalen Bremsbetriebs oberhalb einer Umgebungstemperatur und während eines Notbremsbetriebs unterhalb einer Umgebungstemperatur schmilzt, um thermische Energie zu absorbieren.

11. Verfahren nach Anspruch 10, wobei die Schmelztemperatur des Zwischenmaterials (317) über 520 Kelvin und unter 575 Kelvin liegt.

12. Verfahren nach einem der Ansprüche 9-10, wobei das Zwischenmaterial (317) mindestens eines von einer metallischen Legierung, einem Polymer und/oder einem chemischen Salz ist.

13. Verfahren nach einem der Ansprüche 9-11, wobei die hohle Basis (315) durch ein feuerfestes Gehäuse (314) umgeben ist.

## Revendications

1. Dissipateur thermique (310) pour un étrier de frein, ledit dissipateur thermique (310) comprenant ;
une base creuse (315) ;
un matériau intermédiaire (317) prévu dans la base creuse (315) ; dans lequel, en cours d'utilisation pendant une opération de freinage d'urgence, le matériau intermédiaire (317) est configuré pour fondre et absorber l'énergie thermique de l'étrier de frein (300) ; **caractérisé en ce que** le dissipateur thermique comprend en outre des ailettes internes (318, 319) s'étendant dans le matériau intermédiaire (317).

2. Dissipateur thermique selon la revendication 1, comprenant en outre une pluralité d'ailettes de refroidissement (316) situées adjacentes à la base creuse (315).

3. Dissipateur thermique selon les revendications 1 ou 2, dans lequel, en cours d'utilisation, le matériau intermédiaire (317) est configuré pour fondre au-dessus d'une température de l'environnement pendant un fonctionnement de freinage normal et en dessous d'une température de l'environnement pendant un fonctionnement de freinage d'urgence afin d'absorber de l'énergie thermique.

4. Dissipateur thermique selon la revendication 3, dans lequel la température de fusion du matériau intermédiaire (317) est supérieure à 520 kelvin et inférieure à 575 kelvin.

5. Dissipateur thermique selon une quelconque revendication précédente, dans lequel le matériau intermédiaire (317) est au moins l'un d'un alliage métallique, d'un polymère et/ou d'un sel chimique.

6. Dissipateur thermique selon une quelconque revendication précédente, dans lequel la base creuse (315) est entourée d'un boîtier réfractaire (314).

7. Etrier de frein (300), ledit étrier de frein comprenant ;
une pale de rotor (140) ;
un arbre relié à la pale de rotor (311) ;
un frein de rotor (150) relié à l'arbre ;
un dissipateur thermique (310) selon l'une quelconque des revendications 1 à 6 relié au frein de rotor (150).

8. Etrier de frein selon la revendication 7, l'étrier de frein comprenant en outre :
une pluralité de disques (313) adjacents à un premier côté de la base creuse (315) ;
une pluralité d'ailettes de refroidissement (316) adjacentes à un second côté de la base creuse (315) ;
une première pluralité d'ailettes internes (318) s'étendant dans le matériau intermédiaire depuis le premier côté de la base creuse (315) ; et
une seconde pluralité d'ailettes internes (319) s'étendant dans le matériau intermédiaire depuis le second côté de la base creuse (315) .

9. Procédé de transfert d'énergie thermique d'un étrier de frein (300) pendant une opération de freinage d'urgence, le procédé comprenant :
la fourniture d'un dissipateur thermique (310), ledit dissipateur thermique (310) comprenant une base creuse (315) ;
la fourniture d'un matériau intermédiaire (317) dans la base creuse (315), dans lequel, pendant une opération de freinage d'urgence, le matériau intermédiaire (317) fond pour absorber de l'énergie thermique de l'étrier de frein (300) ; **caractérisé en ce que** le dissipateur thermique comprend en outre des ailettes internes (318, 319) s'étendant dans le matériau intermédiaire (317) .

10. Procédé selon la revendication 9, dans lequel le matériau intermédiaire (317) fond au-dessus d'une température de l'environnement pendant l'opération de freinage normal et en dessous d'une température de l'environnement pendant l'opération de freinage d'urgence pour absorber de l'énergie thermique.

11. Procédé selon la revendication 10, dans lequel la température de fusion du matériau intermédiaire (317) est supérieure à 520 kelvin et inférieure à 575 kelvin.

12. Procédé selon l'une quelconque des revendications 9 à 10, dans lequel le matériau intermédiaire (317) est au moins l'un d'un alliage métallique, d'un polymère et/ou d'un sel chimique.

13. Procédé selon l'une quelconque des revendications 9 à 11, dans lequel la base creuse (315) est entourée d'un boîtier réfractaire (314).
